# EUROPEAN PATENT SPECIFICATION

(11) **EP 1 663 445 B1**
(45) Date of publication and mention of the grant of the patent: **05.05.2010**
(21) Application number: 04766679.7
(22) Date of filing: 02.09.2004
(51) Int. Cl.: B01D 39/20, B22F 3/00

(54) **FILTER FOR A SPIN PACK ASSEMBLY**
FILTER FÜR EINE SPINPACK-ANORDNUNG
FILTRE D'UN ENSEMBLE FILIERE

(30) Priority: 12.09.2003 EP 03103368
(43) Date of publication of application: 07.06.2006
(73) Proprietor: NV Bekaert SA, 8550 Zwevegem (BE)
(72) Inventor: VERSCHAEVE, Frank, B-8553 OTEGEM (BE); VERSIECK, Johan, B-9031 DRONGEN (BE)
(86) International application number: PCT/EP2004/052004
(87) International publication number: WO 2005/025719

(56) References cited:
- EP-A- 0 764 488
- EP-A- 1 205 602
- WO-A-02/057000
- WO-A-02/063148
- WO-A-02/083268
- DE-A- 1 924 836
- GB-A- 821 690
- US-A- 3 490 902
- US-A- 3 505 038
- US-A- 5 665 479
- US-B1- 6 171 536
- PATENT ABSTRACTS OF JAPAN vol. 009, no. 073 (M-368), 3 April 1985 (1985-04-03) & JP 59 205239 A (SUMITOMO KINZOKU KOGYO KK;OTHERS: 01), 20 November 1984 (1984-11-20)
- PATENT ABSTRACTS OF JAPAN vol. 014, no. 549 (M-1055), 6 December 1990 (1990-12-06) & JP 02 232306 A (NIBETSUKUSU KK;OTHERS: 01), 14 September 1990 (1990-09-14)
- PATENT ABSTRACTS OF JAPAN vol. 018, no. 525 (C-1257), 5 October 1994 (1994-10-05) & JP 06 182226 A (NIBETSUKUSU KK;OTHERS: 01), 5 July 1994 (1994-07-05)

## Description

### Field of the invention.

The invention relates to a spinpack filter comprising a porous body of sintered short metal fibers.

### Background of the Invention.

In spinning of polymer fibers, the polymer melt is subjected to a filtration by means of a spinpack filter before the polymer is passed through the spinning holes of a spinneret.

The purpose of the spinpack filter is to capture impurities and to shear the gels contained in the polymer.

Spinpack filters comprising sand particles are known in the art.

However, after a certain period of use, preferential channels are created in the sand and the shearing effect is ended.

Spin pack filters comprising metal powder have the drawback to have a low porosity and thus a high pressure drop.

US 5665479 describes a spinpack filter comprising a web of metal fibers. The metal fibers are obtained by bundle drawing.

Webs made from metal fibers obtained by a shaving process are known from US 3505038.

### Summary of the invention.

It is an object of the present invention to provide a spinpack filter having a high porosity and thus a low pressure drop

It is another object of the invention to provide a spinpack filter having a homogeneous pore size distribution.

It is a further object to provide a spinpack filter which may withstand the high pressures applied during use.

According to a first aspect of the present invention, a spinpack filter comprising a porous body of sintered short metal fibers is provided.

The short metal fibers according to the present invention have a polygonal cross-section, such as a trigonal or substantially trigonal cross-section; a square or substantially square cross-section or a rectangular or substantially rectangular cross-section.

The short metal fibers have preferably sharp edges.

A preferred way to manufacture the short metal fibers used in a spinpack filter according to the present invention is starting from shaved fibers.

Shaved fibers are manufactured by shaving off the edge of a coil of thin metal foil.
From the thus obtained shaved fibers, short fibers can be made by any technique known in the art. Short metal fibers may for example be obtained by mechanically cutting long metal fibers into short fibers or by cutting long metal fibers into short fibers by a chemical method.
Also metal wool, such as steel wool, can be used as starting material to obtain short metal fibers.

The short metal fibers preferably have an equivalent diameter between 1 and 150 µm, for example 2, 22, 30, 35, 65 and 100 µm.
With the term "equivalent diameter" is meant the diameter of an imaginary circle, which has the same surface as the surface of a fiber cut perpendicular to the major axis of the fiber.

For the purpose of this invention short metal fibers are defined as metal fibers having a length over diameter ratio (L/d) ranging between 30 and 100.

The short metal fibers may comprise fibers having a columnar shape or they may comprise curved and/or entangled fibers such as the fibers described in WO02/057035.
Curved and/or entangled fibers may be preferred as in a set of curved and/or entangled fibers, numerous contact points between the fibers are created so that the fibers can easily be sintered without requiring high forces.

Any type of metal or metal alloy may be used to provide the short metal fibers used to provide the spinpack filter.
The short metal fibers are for example made of steel such as stainless steel. Preferred stainless steel alloys are AISI 300 or AISI 400-serie alloys, such as AISI 316L or AISI 347, or alloys comprising iron, aluminium, chromium, stainless steel comprising chromium, aluminium and/or nickel and 0.05 to 0.3 % by weight of yttrium, cerium, lanthanum, hafnium or titanium (known as Fecralloy^{®}) are used.
The short metal fibers can also be made of nickel, titanium, aluminium, copper or of an alloy of one of these metals.

A spinpack filter according to the present invention has a porosity higher than 60%, for example between 60 % and 90 %, such as 70%, 80 % or 85%.

As the spinpack filter is sintered, the filter shows a homogeneous distribution of pores. The size of the pores is equal over the whole filter. No preferred channels are created.

It has been shown that the irregular shapes and/or the sharp edges of the short metal fibers are extremely effective at shearing polymer gels, as well as removing impurities from the polymer melt. This is an advantage over known spinpack filters such as spinpack filters comprising metal fibers having a round cross-section.

Spinpack filters known in the art such as spinpack filters comprising metal powder tend to density during use under the high pressures that are (up to 120 and even up to 250 bar) applied.
The densification may alter the characteristics of the spinpack filter during the lifetime of the filter.

A spinpack filter according to the present invention may resist compaction and maintains its high porosity during spinning. A spinpack filter according to the present invention can thus be used for high-speed spinning and has a longer life time than the spinpack filters known in the art.

Furthermore, a spinpack filter according to the present invention is inert to hot polymer melts.

According to a second aspect of the present invention, an assembly for spinpack filtration is provided. The assembly comprises a spinpack filter according to the present invention.

The assembly may further comprise a screen, located at the downstream side of the spinpack filter.
This screen may for example comprise a mesh, such as a welded or woven mesh or it may comprise a non-woven fleece comprising metal fibers. Preferably, this non-woven fleece is sintered.

According to a third aspect of the present invention, a method of manufacturing a spinpack filter is provided.
The method comprises the steps of
- providing a set of short metal fibers;
- introducing said set of short metal fibers into a three-dimensional shaped mould,
- sintering said set of short metal fibers to form a sintered spinpack filter.

The introduction of a set of short metal fibers into a three-dimensional shaped mould comprises for example the pouring of a set of short metal fibers into this mould.
Alternatively, the short metal fibers are brought in a suspension, using an appropriate agent or a mixture of appropriate agents and the suspension is brought into a mould. The suspension liquid may be removed, for example by evaporation or sucking out.

The sintering conditions are dependent upon the alloy and the properties required by the final product.

Possibly, before the sintering, the short metal fibers are pressed together to improve the coherency and/or to change the density.

According to a further aspect of the present invention, a method to increase the shearing of polymer gels during filtration of a polymer is provided. The method comprises the use of a spinpack filter comprising a porous structure of sintered short metal fibers having polygonal cross-sections.

### Brief description of the drawings.

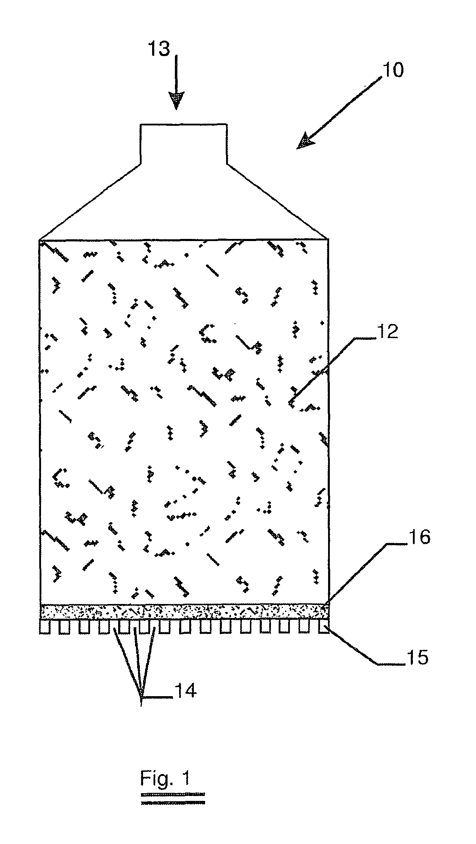

The invention will now be described into more detail with reference to the accompanying drawings wherein
- Figure 1 shows an assembly for spinpack filtration comprising a spinpack filter according to the present invention.

### Description of the preferred embodiments of the invention.

An assembly for spinpack filtration 10 comprising a spinpack filter 12 according to the present invention is illustrated in Figure 1.
A molten viscous polymer of fiber-forming material is introduced to the assembly 10 by means of supply 13. The molten viscous polymer material is supplied under pressure, to a spinpack filter 12 and is extruded in a filamentary form, through spinning holes 14 of a spinneret 15 located at a downstream side of the spinpack filter 12.
The spinpack filter 12 comprises for example short metal fibers having an equivalent diameter of 22 µm. The porosity of the spinpack filter is for example 72 %.
The spinpack filter may have any shape. In a preferred embodiment the spinpack filter 12 has a disk-like or cylinder-like shape, having a diameter ranging between 10 and 100 mm and a height ranging between 5 and 100 mm. A preferred spinpack filter 12 has for example a diameter of 50 mm and a height of 50 mm.
The spinpack filter 12 may also have a tubular shape.

Possibly, at the downstream side of the spinpack filter, between the spinpack filter 12 and the spinneret 15, a screen 16 is present.

This screen may for example comprise a mesh such as a welded or woven mesh or it may comprise a non-woven fleece comprising metal fibers.

This metal fiber fleece preferably comprises metal fibers having a diameter ranging between 1 and 100 µm, e.g. between 2 and 25 µm. The metal fibers can for example be obtained by bundle drawing or by shaving techniques (e.g. as described in US4930199), or by any other process known in the art.

The metal fiber fleece is sintered.

Any type of metal or metal alloy may be used to provide the metal fibers of the metal fiber fleece. Preferably, steel or stainless steel fibers are used, e.g. stainless steel fibers from AISI 300 or AISI 400-serie alloys or alloys comprising iron, aluminium and chrome, stainless steel comprising chromium, aluminium and/or nickel and 0.05 to 0.3 % by weight of yttrium, cerium, lanthanum, hafnium or titanium (known as Fecralloy^{®}), are used.
The metal fibers can also be made of nickel, titanium, aluminium, copper or of an alloy of one of these metals.

The non-woven metal fiber fleece has preferably a weight between 300 and 1500 g/m². The porosity of the metal fiber web is preferably between 30 and 80 %.

The metal fiber fleece may comprise only one layer of metal fibers, or may be a stack of different fiber layers, each fiber layer comprising metal fibers with a specific equivalent fiber diameter, fiber density and weight of the layer. This weight of each layer is expressed in g/m², and will hereafter be referred to as "specific layerweight".
The different layers of the metal fiber fleece may be sintered separately. Alternatively, the stack comprising the different layers may be sintered.

An example of a multi-layered non-woven metal fiber fleece comprises a first layer comprising metal fibers with a diameter of 6.5 µm, a second layer comprising metal fibers with a diameter of 4 µm and a third layer comprising metal fibers with a diameter of 2 µm.

Possibly, the metal fiber fleece is isostatically cold pressed.

During the isostatically cold pressing, the web is exposed to an isostatical pressure higher than 2 x 10⁸ Pa and preferably to a pressure higher than 2.5 x 10⁸ Pa.
By the isostatically pressing operation a homogeneous porosity over the entire surface of the web is obtained.

## Claims

1. A spinpack filter (12) comprising a porous structure of sintered short metal fibers, said short metal fibers having a polygonal cross-section and said short metal fibers having a length over diameter ratio (Ud) ranging between 30 and 100.

2. A spinpack filter (12) according to claim 1, whereby said porous structure has a porosity higher than 60 %.

3. A spinpack filter (12) according to claim 1 or 2, whereby said short metal fibers are obtained by shaving off the edge of a coil of metal foil to manufacture shaved fibers and by subsequently cutting said shaved fibers to obtain short metal fibers.

4. A spinpack filter (12) according to any one of the preceding claims, whereby said short metal fibers have an equivalent diameter between 1 and 150 µm.

5. An assembly (10) for spinpack filtration comprising a spinpack filter (12) according to any one of claims 1 to 4.

6. An assemply (10) according to claim 5, whereby said assembly further comprises a screen (16) at the downstream side of said spinpack filter.

7. An assembly (10) according to claim 6, whereby said screen comprises a welded or woven mesh or a non-woven fleece comprising metal fibers.

8. A method to manufacture a spinpack filter (12), said method comprising the steps of
- providing a set of short metal fibers having a polygonal cross-section and having a length over diameter ratio (Ud) ranging between 30 and 100;
- introducing said set of short metal fibers into a three-dimensional shaped mould;
- sintering said set of short metal fibers to form a sintered spinpack filter (12).

9. A method to increase the shearing of polymer gels during filtration of a polymer by using a spinpack filter (12) comprising a porous structure of sintered short metal fibers, said short metal fibers having a polygonal cross-section and said short metal fibers having a length over diameter ratio (L/d) ranging between 30 and 100.

## Patentansprüche

1. Spinpack-Filter (12), eine poröse Struktur aus gesinterten kurzen Metallfasern umfassend, wobei die kurzen Metallfasern einen mehreckigen Querschnitt aufweisen und die kurzen Metallfasern ein Länge-zu-Durchmesser-Verhältnis (L/d) zwischen 30 und 100 aufweisen.

2. Spinpack-Filter (12) nach Anspruch 1, wobei die poröse Struktur eine Porosität von mehr als 60% aufweist.

3. Spinpack-Filter (12) nach Anspruch 1 oder 2, wobei die kurzen Metallfasern durch Abschälen des Randes eines Coils aus Metallfolie gewonnen werden, um geschälte Fasern herzustellen, und durch anschließendes Schneiden der geschälten Fasern, um kurze Metallfasern zu gewinnen.

4. Spinpack-Filter (12) nach einem der vorhergehenden Ansprüche, wobei die kurzen Metallfasern einen äquivalenten Durchmesser zwischen 1 und 150 µm aufweisen.

5. Anordnung (10) zur Spinpack-Filtration, die einen Spinpack-Filter (12) nach einem der Ansprüche 1 bis 4 umfasst.

6. Anordnung (10) nach Anspruch 5, wobei die Anordnung an der Abströmseite des Spinpack-Filters ferner ein Sieb (16) umfasst.

7. Anordnung (10) nach Anspruch 6, wobei das Sieb ein geschweißte oder gewebtes Gitter oder ein Vlies umfasst, das jeweils Metallfasern umfasst.

8. Verfahren zur Herstellung eines Spinpack-Filters (12), wobei das Verfahren folgende Schritte umfasst:
- Bereitstellen einer Menge kurzer Metallfasern, die einen mehreckigen Querschnitt und ein Länge-zu-Durchmesser-Verhältnis (L/d) zwischen 30 und 100 aufweisen,
- Einrühren der Menge kurzer Metallfasern in ein dreidimensionales Formwerkzeug,
- Sintern der Menge kurzer Metallfasern, um einen gesinterten Spinpack-Filter (12) zu bilden.

9. Verfahren zur Verbesserung des Abscherens von Polymergelen während der Filtration eines Polymers unter Verwendung eines Spinpack-Filters (12), der eine poröse Struktur aus gesinterten kurzen Metallfasern umfasst, wobei die kurzen Metallfasern einen mehreckigen Querschnitt aufweisen und wobei die kurzen Metallfasern ein Länge-zu-Durchmesser-Verhältnis (L/d) zwischen 30 und 100 aufweisen.

## Revendications

1. Filtre (12) pour filière, comprenant une structure poreuse en courtes fibres métalliques frittées, lesdites courtes fibres métalliques présentant une section transversale polygonale et lesdites courtes fibres métalliques ayant un rapport (L/d) entre leur longueur et leur diamètre compris entre 30 et 100.

2. Filtre (12) pour filière selon la revendication 1, dans lequel ladite structure poreuse a une porosité supérieure à 60 %.

3. Filtre (12) pour filière selon les revendications 1 ou 2, dans lequel lesdites courtes fibres métalliques sont obtenues par décolletage du bord d'une bobine de tôle métallique pour fabriquer des fibres de décolletage et ensuite en découpant lesdites fibres de décolletage pour obtenir de courtes fibres métalliques.

4. Filtre (12) pour filière selon l'une quelconque des revendication précédentes, dans lequel lesdites courtes fibres métalliques ont un diamètre équivalent compris entre 1 et 150 µm.

5. Ensemble (10) pour filtration de filière comprenant un filtre (12) pour filière selon l'une quelconque des revendications 1 à 4.

6. Ensemble (10) selon la revendication 5, dans lequel ledit ensemble comprend en outre un tamis (16) sur le côté aval dudit filtre de filage.

7. Ensemble (10) selon la revendication 6, dans lequel ledit tamis comprend un treilles soudé ou tissé ou un feutre non tissé contentant des fibres métalliques.

8. Procédé de fabrication d'un filtre (12) pour filière, ledit procédé comprenant les étapes qui consistent à :
prévoir un ensemble de courtes fibres métallique dont la section transversale est polygonale et dont le rapport (L/d) entre la longueur et le diamètre est compris entre 30 et 100,
introduire ledit ensemble de courtes fibres métalliques dans un moule de forme tridimensionnelle,
fritter ledit ensemble de courtes fibres métalliques pour former un filtre (12) pour filière fritté.

9. Procédé d'augmentation du cisaillement de gels polymères pendant la filtration d'un polymère par recours à un filtre (12) pour filière comprenant une structure poreuse de courtes fibres métalliques frittées, lesdites courtes fibres métalliques ayant une section transversale polygonale et un rapport (L/d) entre leur longueur et leur diamètre compris entre 30 et 100.
